# EUROPEAN PATENT APPLICATION

(11) **EP 2 250 920 A1**
(43) Date of publication of application: **17.11.2010**
(21) Application number: 09713593.3
(22) Date of filing: 19.01.2009
(51) Int. Cl.: A43C 3/00, A43C 9/00, A44B 11/00

(54) **SHOELACE FASTENER AND SHOE**

(30) Priority: 21.02.2008 CN 200810026412
(71) Applicant: Guangzhou Her Sheng Footwear Co., Ltd., Renhe Town Baiyun, Guangzhou Guangdong 510470 (CN); Liu, Hsing-chyi, Guangzhou, Guangdong 510420 (CN)
(72) Inventor: LIU, Hsing-Chyi, Guangzhou, Guangdong 510420 (CN)
(74) Representative: Cheyne, John Robert Alexander M.
(86) International application number: PCT/CN2009/070193
(87) International publication number: WO 2009/103223

(57) **Abstract**

A shoelace locker used in a shoe is provided, which comprises a base portion, a neck portion extending from one end of the base portion and an arm portion extending from the neck portion towards the other end of the base portion. A receiving hole is defined by the arm portion, neck portion and base portion collectively. A stop portion protrudes from a distal end of the arm portion and extends to the base portion. The stop portion and the base portion define together therebetween an opening communicating with the receiving hole and lower than the receiving hole. The height of the opening is designed such that the shoelace can be pressed against the opening elastically, thereby getting the shoelace pressed and then located in the receiving hole through the opening. The shoelace can be secured to the shoelace locker conveniently due to formation of a neck-narrowed construction between the opening of the shoelace locker and receiving hole. Also provided are a shoe with the shoelace locker, and a shoe which incorporates a shoelace locker, a shoelace and a shoelace adjustment controller.

## Description

### FIELD OF THE INVENTION

The invention relates to a shoe product and more particularly, the invention relates to a shoelace locker used in a shoe, a shoe with the shoelace locker, and a shoe which incorporates a shoelace locker, a shoelace and a shoelace adjustment controller.

### BACKGROUND OF THE INVENTION

Shoes are necessary products used in our routine everyday life. Conventional shoes are catalogrized mainly into two types, one of which lacks of shoelace such as leather shoes. Shoes of this type are easy, convenient and quick to put on, while the other of which has shoelace provided thereon, one example being athletic sports shoes. Though it may take more time and efforts to put on the shoe with shoelace than does that without shoelace, this type of shoe is demonstrated more advantageous that the shoe without any shoelace in conditions where secured tying of the shoe is required. Take an example, athletic sports shoes having shoelaces can be reliably held on one's feet without risk of taking off therefrom during long time exercise (for example long distance jogging, basketball or soccer play both of which require quick movement). Comparatively, it is more possible for a shoe without shoelace to separate from one's foot. In addition, shoes having shoelaces are still competitive in the marketplace due to their aesthetic appearance and as a result, theses shoes will not be replaced by shoes without shoelace.

With respect to the shoe having a shoelace, the shoe can engage with the shoelace by several manners. Among these engagement manners, one engagement manner is implemented as such. More particularly, pairs of eyelets are formed on eyelet tabs of a shoe, then the shoelace passes sequentially through these eyelets, and finally the shoelace is tightened and tied, thereby getting the shoe put on one's foot. This engagement however, will cause damage to the shoe, as forces and counter forces generated between the shoe and eyelet tabs are of great magnitude, which will result in tear out of the shoe, hence making the shoe damaged. Moreover, it will be more difficult for the shoelace to be tightened securely as the fiction between the shoelace and shoe is large enough.

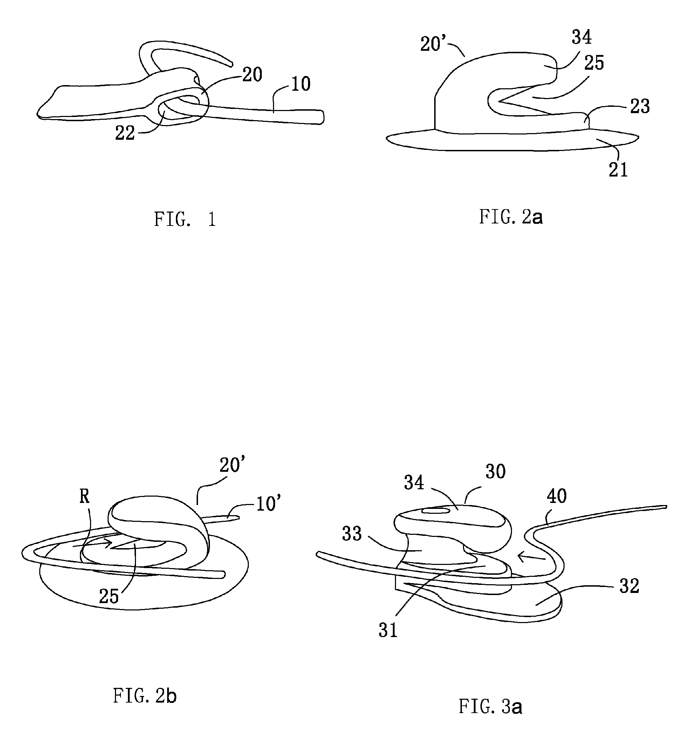

Another improved shoelace-shoe engagement construction is implemented by a shoelace locker which is shown in figure 1. As illustrated, a shoelace locker 20 is constructed of metal or plastic material and shown as an individual component. The locker 20 is fastened to the shoe by means of a sewing machine or rivets. A plurality of shoelace through holes 22 is defined in the shoelace locker 20, the shoelace 10 passes the though holes 22 in sequence, and then is tied securely. It will still take much time and effort of a user to make the shoelace passing through the shoelace through holes of the shoelace locker, thereby bringing inconvenience to the user.

Another shoelace locker is shown in figures 2a-2b. As shown in the drawings, the shoelace locker 20' includes a base plate 21, a projection portion 23 projecting from the base plate 21 and a curved portion 24 bending upon the projection portion 23. In addition, a semi-opened wedge portion 25 is defined between the curved portion 24 and the projection portion 23. After installation of the shoelace locker 20' onto the shoe, what only should be done is to tie the shoelace 10' along the direction R to the wedge portion 25 by the user, as the shoelace 10' is clamped into the wedge portion 25 by structure of the wedge portion itself. This type of shoelace locker employs the semi-opened configuration and as a result, it is unnecessary to make the shoelace passing the through holes. However, as it will be difficult to adjust the tightness of the shoelace again once the wedge portion secures the shoelace thereto and consequently, the shoelace must be separated from each shoelace locker frequently and then be adjusted in tightness. Therefore, it is inconvenient to use.

It is therefore, necessary to provide a shoelace locker in order to overcome drawbacks of the prior art.

### SUMMARY OF THE INVENTION

One object of the invention is to provide a shoelace locker, a shoe having the shoelace locker and a shoe which has the shoelace locker, shoelace and a shoelace adjustment controller so as to tie or replace the shoelace quickly and conveniently.

For this end, a shoelace locker used in a shoe is provided, which comprises a base portion, a neck portion extending up from one end of the base portion, and an arm portion extending transversely from the neck portion towards other end of the base portion. A receiving hole for receiving a shoelace being defined by the arm portion, neck portion and base portion collectively. A stop portion protruding from a distal end of the arm portion to the base portion. The stop portion and the base portion defining an opening which is through with the receiving hole and is smller than the receiving hole. The opening is designed to pass pressed shoelace only, thereby the shoelace is pressed to pass the opening by pulling and then is located in the receiving hole.

The invention also provides a shoe with a shoelace locker, said shoelace locker including a base portion, a neck portion extending from one end of the base portion , an arm portion extending from the neck portion towards the other end of the base portion. A receiving hole for receiving the shoelace is defined by the arm portion, neck portion and base portion collectively. A stop portion protrudes from a distal end of the arm portion and extends to the base portion. The stop portion and the base portion define an opening therebetween, which is through with the receiving hole and smaller than the receiving hole. The opening is designed to pass a pressed shoelace only, thereby the shoelace is pressed by pulling and then is located in the receiving hole through the opening.

The invention also provides a shoe which incorporates a shoelace locker, a shoelace and a shoelace adjustment controller. The shoe includes a plurality of shoelace lockers disposed on a pair of eyelet tabs. Said each shoelace locker includes a base portion, a neck portion extending from one end of the base portion, and an arm portion extended transversely from the neck portion towards other end of the base portion. A receiving hole for receiving the shoelace is defined by the arm portion, neck portion and base portion collectively. A stop portion protrudes from a distal end of the arm portion and extends to the base portion. The stop portion and the base portion define an opening, which is through with the receiving hole and smaller than the receiving hole. The opening is designed to pass a pressed shoelace only, thereby the shoelace is pressed by pulling and then located in the receiving hole through the opening. The shoe also includes a shoelace which passes through the openings of the shoelace lockers in sequence and then is retained in the receiving holes so that an interlaced shoelace is formed. The both ends of the shoelace may be connected with each other to render an endless shoelace. The shoe also includes a shoelace adjustment controller. The shoelace adjustment controller includes a fastener and a guiding member. The fastener comprises a plate and a finger portion formed at two lateral sides of the plate. A shoelace through hole is defined between the plate and finger portion. In addition, a passage is defined between the plate and the finger portion and communicates the shoelace through hole. An accommodating chamber is defined in the guiding member and extends across the entire guiding member to retain the fastener therein. One end of the shoelace runs across the shoelace through hole, through the passage and finally extends into the accommodating chamber. The accommodating chamber is adapted to selectively cause movement of the fastener with respect to the guiding member along the length direction of the shoelace, thus resulting in changes in distance between the plate and finger portion, thereby causing the shoelace tightened or loosing between the plate and finger portion.

The invention is advantageous in that the shoelace can be secured to the shoelace locker conveniently due to formation of a neck-narrowed construction between the opening of the shoelace locker and receiving hole. The shoelace can be locked into or separated from the neck-narrowed construction elastically by resilient pushing action of the shoelace locker against the shoelace. Moreover, the shoelace is capable of sliding in the neck-narrowed construction with freedom.

The preferred embodiments of the present invention will be discussed in detail with reference to the accompanying drawings.

### BRIEF DESCRIPTION OF THE DRAWINGS

Figure 1 illustrates a conventional engagement manner between a shoelace locker and a shoelace;

Figure 2a shows a perspective view of another prior art shoelace locker;

Figure 2b shows the engagement relationship between the shoelace locker shown in Figure 2a and a shoelace;

Figure 3a illustrates a perspective view of a shoelace locker according to a first embodiment of the invention, engagement between the shoelace locker and shoelace being also shown;

Figure 3b shows a side view of the shoelace locker of Figure 3 a;

Figure 3c shows a bottom plan view of the shoelace locker of Figure 3a;

Figure 3d shows a rear view of the shoelace locker of Figure 3 a;

Figure 3e shows a top plan view of the shoelace locker of Figure 3a;

Figure 3f shows a cross-sectional view of the shoelace locker shown in figure 3a along line A-A;

Figure 4a denotes a perspective view of a shoelace locker according to another embodiment of the invention;

Figure 4b denotes a top plan view of the shoelace locker with tooth-structure shown in figure 4a;

Figure 4c shows a cross-sectional view of the toothed shoelace locker of figure 4b along line B-B;

Figure 4d shows a cross-sectional view of the toothed shoelace locker of figure 4b along line A-A;

Figure 5 shows the engagement relationship between the shoelace locker and shoelace;

Figure 6 shows the engagement relationship among the shoelace locker, shoelace and the shoe of figure 5;

Figure 7 shows a plan view of a shoelace adjustment controller according to an embodiment of the invention;

Figure 8a shows a perspective view of a fastener of the shoelace adjustment controller of figure 7;

Figure 8b shows a perspective view of a guiding member of the shoelace adjustment controller of figure 7;

Figure 9a shows a plan view of the fastener of figure 8a;

Figure 9b shows a side view of the fastener of figure 9a;

Figure 10a shows a plan view of the guiding member of figure 8b;

Figure 10b shows a side elevation view of the guiding member of figure 10a;

Figure 10c shows a cross-sectional view of the guiding member of figure 10b across line A-A;

Figure 10d shows a top plan view of the guiding member of figure 10a;

Figure 11 shows connection between the shoelace adjustment controller of figure 11 and the shoe;

Figure 12 shows in a cross-section the spatial relationship between the shoelace adjustment controller of figure 11 and the shoe; and

Figure 13 shows connections among the shoelace locker, shoelace, shoe and the shoelace adjustment controller.

### DETAILED DESCRIPTION OF THE INVENTION

The present invention will now be described in connection with the drawings. As discussed above, the invention is intended to provide a shoelace locker which is easy to use and convenient, and a shoe incorporating the shoelace locker of this type. The shoelace can be secured to the shoelace locker conveniently due to formation of a neck-narrowed construction between the opening of the shoelace locker and receiving hole. The shoelace can be locked into or separated from the neck-narrowed construction elastically by resilient pushing action of the shoelace locker against the shoelace. Moreover, the shoelace is capable of sliding in the neck-narrowed construction with freedom. Detailed description will now be directed to the shoelace locker and shoe provided by the invention.

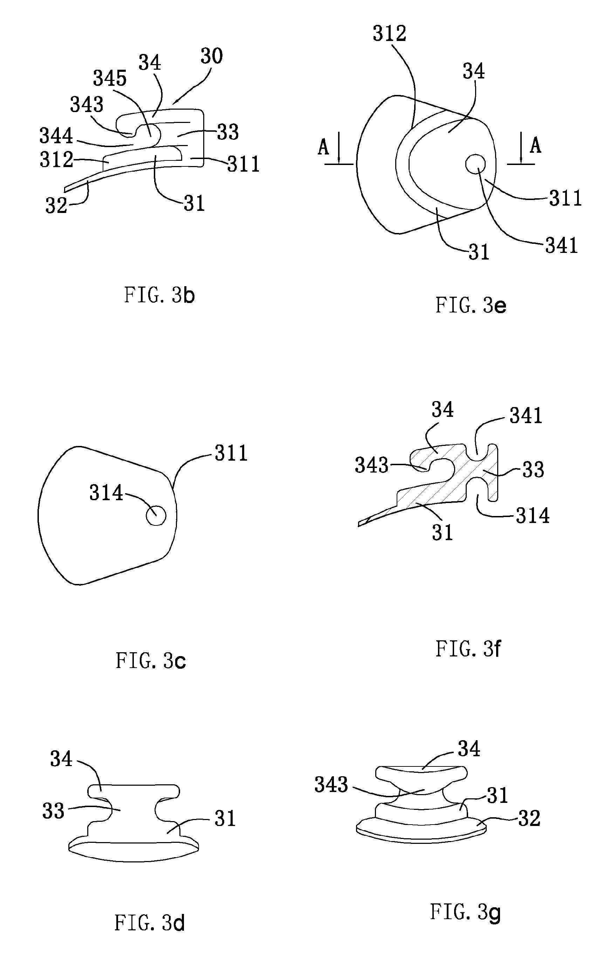

As shown in figures 3a-3g, a shoelace locker 30 according to a first embodiment of the invention has neck-narrowed construction. The shoelace locker 30 includes a base portion 31, a neck portion 33 extending from the base portion 31, and an arm portion 34 extending transversely from the neck portion 33.

More particularly, the base portion 31 includes a first end 311 and a second end 312 opposite to the first end 311. The neck portion 33 extends upwardly from the first end 311 of the base portion 31 in a manner substantially perpendicular to the surface into which the base portion lies. The arm portion 34 runs from one end far from the base portion, of the neck portion 33 towards the second end 312 transversely. A distal end of the arm portion 34 (namely, one end located away from the neck portion 33) protrudes towards the base portion 31 so as to form a stop portion 343. Specifically, curved surfaces, and more preferably circular arc surface, can be defined as transition surface between the neck portion 33 and base portion 31 or between the neck portion 33 and arm portion 34, such that a receiving hole 345 which is semi-opened and of substantially circular is defined among the base portion 31, neck portion 33 and arm portion 34, hence making the receiving hole 345 more conformable to the shoelace in shape. Alternatively, the receiving hole 345 may be defined among the base portion 31, neck portion 33 and arm portion 34 as a semi-opened hole which is gradually widened from the neck portion 33 towards opening direction so that the shape of the receiving hole 345 promotes further tight fit between the shoelace and stop portion 343. An opening 344 is defined between the stop portion 343 and the base portion 31. It is importantly noted that the opening 344 communicates the receiving hole 345, and that the opening 344 is lower than the receiving hole 345, thereby facilitating resilient compression of the shoelace for placing the shoelace into the receiving hole 345 through said opening 344 after compression of the shoelace.

Additionally, to reduce load of the above mentioned shoelace adjustment controller, the invention further presents a toothed shoelace locker constructed by incorporation of a pair of teeth for securing the shoelace into the shoelace locker described above.

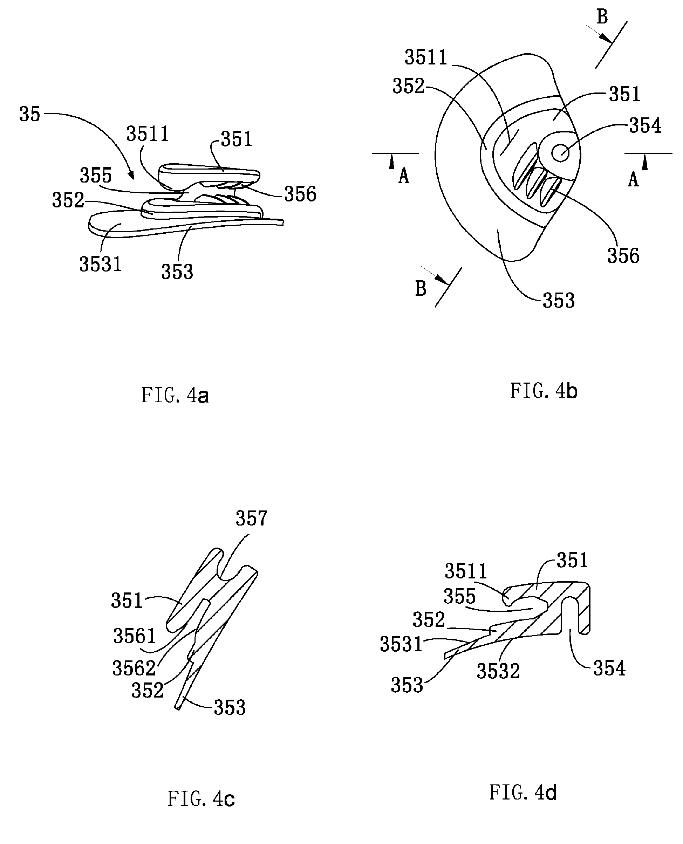

As shown in figures 4a-4d, the entire structure of the shoelace locker 35 is similar to that of the shoelace locker 30, and includes a base portion 352, a neck portion 357, a receiving hole 355, a material-averaging hole 354 and a bottom surface 3532 engaging with the upper vamp. These components are the same as the shoelace locker 30 in functions and manner by which these components engage with the shoelace 40 and shoe 50. What is different from the shoelace locker 30 is two groups of teeth 356 are formed on the shoelace locker 30. These two groups of teeth are distributed on the base portion 352 and arm portion 351 of the toothed shoelace locker 35 respectively, and are connected with the neck portion 357 (referring to figure 4a). A tooth 356 locates only at one side of the locker (namely, one side adjacent to the exit of the shoelace, as the teeth are formed at both sides of the eyelet tabs, see figure 4c).

An upper tooth 3561 and a lower tooth 3562 are angled with each other. The distance from one end close to the neck portion 357 is slightly less than the minimum diameter of the shoelace 40 when being compressed, while the distance from the other end equals to the distance between the base portion 352 and arm portion 351. As a result, the shoelace 40 can come inside from one end having a large distance, and when coming to the other end having a small distance, the shoelace 40 will be squeezed by the teeth 3561 and 3562 and then be locked in its place, thereby achieving partial tightening or loosing effect of the shoelace.

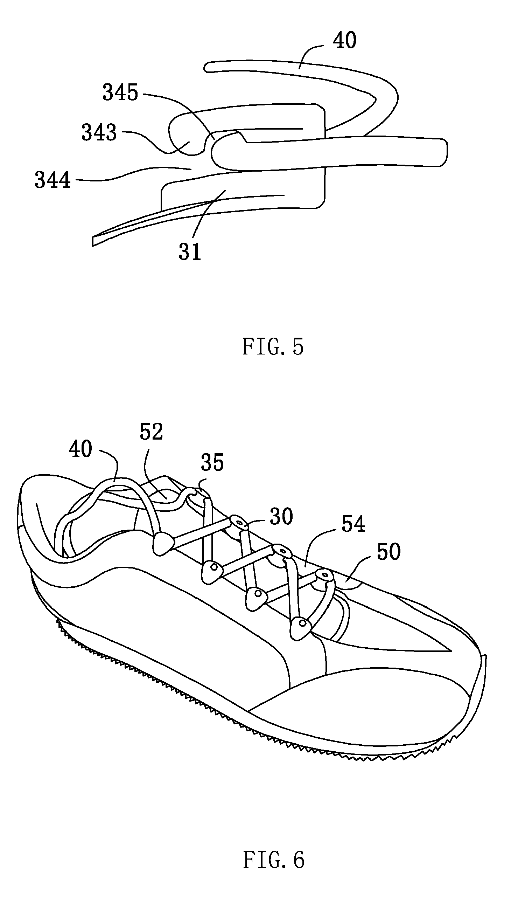

Flexible fit between the shoelace and shoelace locker is obtained by means of neck-narrowed configuration with certain elasticity. The fit therebetween will be discussed below in reference with figure 5. As shown in figure 5, the shoelace 40 of a certain diameter passes at first an opening 344 of which the height is less than the diameter of the shoelace. The shoelace 40 will be locked inside the opening 344 and unable to extend furthermore due to diameter of the shoelace 40 is greater than the height of the opening 344. At this time, it may come time for the user to pull the shoelace 40 towards the opening 344. Because the shoelace is pressed against the opening 344 with resilience, the compressed shoelace 40 is capable of resiliently sliding into the receiving hole 345 via the opening 344. As the height of the opening 344 is smaller than the diameter of the shoelace 40, the shoelace 40 will be constricted into the receiving hole 345 rather than being separated from the opening 344 with ease. Furthermore, the inner surface of the receiving hole 345 may be subjected to a polishing process so as to form a circular hole with mirror-smoothing effect, thus helping free sliding of the shoelace 40 inside the receiving hole 345 without any friction. Moreover, the receiving hole 345 may be configured to be gradually wider from the neck portion 33 towards the opening, thereby making it possible for the receiving hole 345 to promot tight fit between the shoelace and stop portion 343 by the shape of the hole. Afterwards, what only need to do by the user is to pull the shoelace 40 and then get the shoelace 40 tied, thus making the shoelace 40 fixed in its place. When it comes the time to replace old shoelace, the user can pull the shoelace to be replaced out of the opening 344 such that the shoelace is compressed resiliently by the opening 344 and finally separated from the receiving hole 345.

The shoelace locker 30 provided by the invention can be secured onto a shoe (such as the shoe 50 shown in figure 6) with various means. Take as an example, the shoelace locker 30 can be secured onto the shoe via adheresive. As an alternative, the shoelace locker 30 may be installed onto the shoe by dedicated device such as sewing machine. In case a sewing machine is used, construction corresponding to the sewing machine may be provided on the shoelace locker 30 to helping operation of the machine. One example of this construction is an engagement portion 32 (see figure 3a) extending from the base portion 31 of the shoelace locker 30. The engagement portion 32 may also be inserted into the eyelet tabs of the shoe in order to fasten the shoelace locker 30 onto the shoe. In addition, the shoelace locker 30 may also be installed onto the shoe by riveting and in this case, a feature corresponding to the riveting is formed on the shoelace locker 30. The feature is omitted herefrom so as to obscure the invention.

With reference to figure 3b, to insert the engagement portion 32 into the shoe easily yet not have bad influence on aesthetics of the shoe, the engagement portion 32 can be designed so that its thickness becomes smaller eventually, thus facilitating insertion into the shoe without causing thickening of the shoe at locations where the engagement portion 32 is inserted. Accordingly, there will be no significant indicia of engagement. Moreover, to increase interface between the engagement portion 32 and the shoe so as to increase tension force, it is preferred that the engagement portion 32 is shaped to become eventually and diametrically outwardly wider from the second end of the base portion 31 so as to define a sector shape. More preferably, the engagement portion 32 may be made to have a curved shape such as a circular arc shape adapted to the shape of location on the shoe where the engagement portion 32 fits the shoe, thereby not affecting aesthetics of the shoe, while helping fixation of the portion 32 onto the shoe. For example, a curved surface may be formed on the bottom surface of the portion 32, and extends smoothly from one end of the neck portion to the other end, hence becoming more adaptive to the curvature of the upper vamp.

Additionally, to obtain consistent thickness of the shoelace locker 30, and to make forces applied to the shoelace locker 30 during use more equally, a material averaging hole may be defined at suitable location of the shoelace locker 30. For example, as shown in figures 3c and 3f, a material averaging hole 314 may be defined in a lower surface of the base portion 31 (the surface located away from the neck portion 33). Additionally or alternatively, as shown in figures 3f and 3e, a material averaging hole 341 may be defined in the arm portion 34.

Figure 6 shows engagement relationship among the shoelace locker 30, shoelace 40 and shoe 50. Pairs of shoelace lockers 30 are symmetrically distributed on a pair of eyelet tabs 54 of the shoe 50. The shoelace 40 is interlaced by itself and constrained inside the receiving holes (see figure 5). As discussed above, compared to prior art, the shoe of the invention can give the ability of easily tightening or replacing the shoelace quickly to the user.

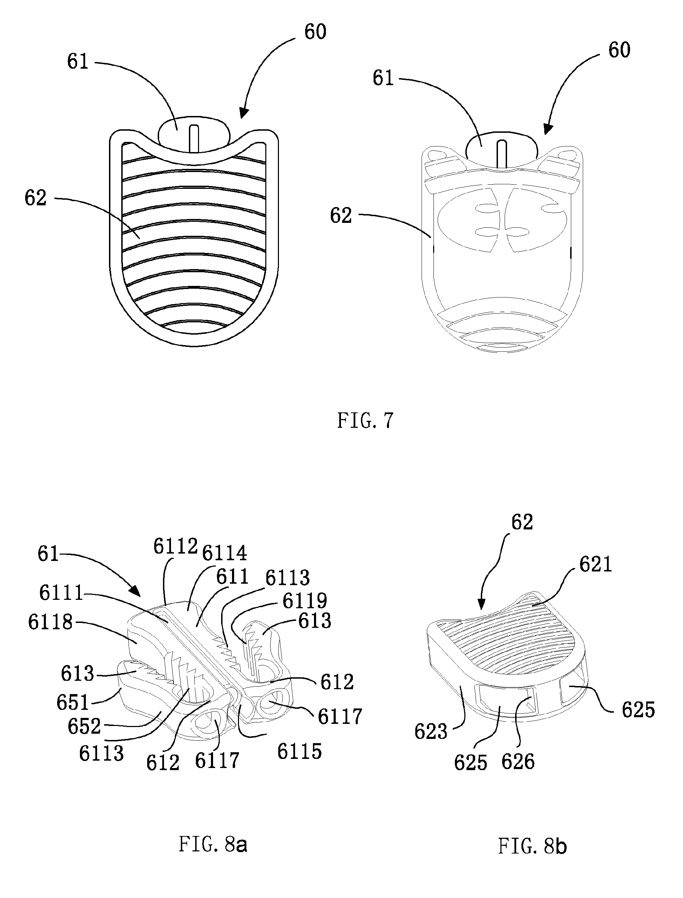

According to another aspect of the invention, a shoelace adjustment controller is provided for controlling the shoelace. That is, making the shoelace loosed or tightened. Figure 7 illustrates a shoelace adjustment controller 60 of this type which includes a guiding member 62 and a fastener 61 capable of being movably contained in the guiding member 62.

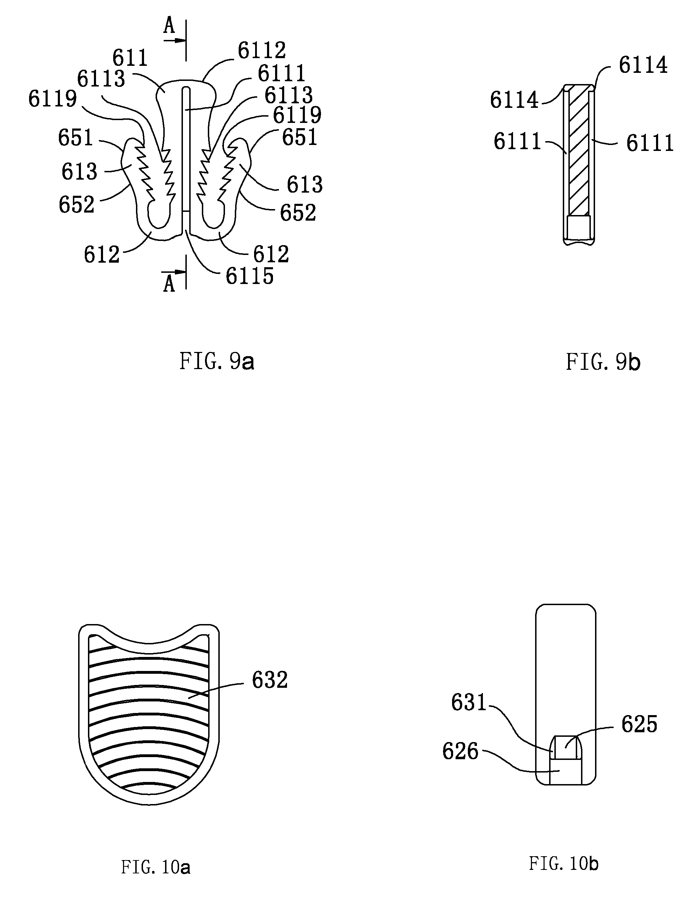

Figures 8a and 9a-9b denote the fastener 61 from different view. As shown in figures, the fastener 61 is of a " 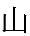 " shape generally and includes an elongated plate 611, a pair of curved portions 612 bent in a transversal direction (perpendicular to the longitudinal direction) outwardly from one end located along longitudinal direction, of the plate 611 and a finger portion 613 extending longitudinally from a distal end of each curved portion 612. The plate 611, the pair of curved portions 612 and the finger portions 613 extending from respective curved portions 612 define collectively the " 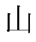 " shape.

Another end of the plate 611 (opposite to the end where the curved portions 612 are formed) constitutes a pressing handle 6112. Moreover, the both ends define there between an upper surface 6114 and a lower surface 6116 parallel to each other. A guiding groove 6111 is formed in the upper surface 6114. The guiding groove 6111 is recessed from the upper surface 6114 and extends between the two ends of the plate 611. In a similar manner, another guiding groove 6111 is also formed in the lower surface 6116. The guiding groove 6111 is recessed from the lower surface 6116 and extends between the two ends of the plate 611. The pair of guiding grooves 6111 may cooperate such that the fastener 61 is guided into the guiding member 62 (which will be described later). In addition, a locating hole 6115 is defined at one end adjacent corresponding curved portion 612, of the plate 611, and the locating hole 6115 is located between the two curved portions 612 for containing a spring therein, thereby realizing relative and elastic movement between the fastener 61 and guiding member 62 (this will be discussed below). Two sidewalls 6118 are formed between the two ends of the plate 611 and are connected to both the upper surface 6114 and lower surface 6116. Specifically, each sidewall 6118 has a friction construction formed thereon so as to enhance friction between the sidewall 6118 and other components such as friction between the shoelaces. Preferably, this friction construction may be embodied as a first toothed portion 6113 formed on the sidewall 6118. This friction construction of course, may be embodied as other known mechanism in the art, for example rough texture.

Each curved portion 612 has a shoelace through hole 6117 defined therein for passing the shoelace therethrough. Each finger portion 613 has an inner surface which is close to corresponding sidewall 6118 of the plate 611. The inner surface has a second toothed portion 6119 formed thereon which corresponds the first toothed portion 6113 of the sidewall 6118 of the plate 611. Of course, the second toothed portion 6119 may also be replaced by other friction configurations one example of which is rough texture as well known in the art. It is noted that each curved portion 612, the respective finger portion 613 extended upon the curved portion 612 and respective sidewall 6118 of the plate 611 define together there between a space (without reference numeral) through which the shoelace may pass. The space (passage) communicates the shoelace though hole 6117 defined in the curved portion 612.

Referring to figure 9a, each finger portion 613 has an outer surface opposing to the inner surface. The outer surface includes a concave wall 652 concaving with respect to the plate 611 and an inclined action wall 651 joined with the concave wall 652. It is clear from the drawings that the horizontal distance between a connection location where the inclined action wall 651 and concave wall 652 are connected with each other and the plate 611 has a maximum value compared with the rest of the finger portion 613. This design is helpful to resilient and deformable engagement between the fastener 61 and guiding member 62.

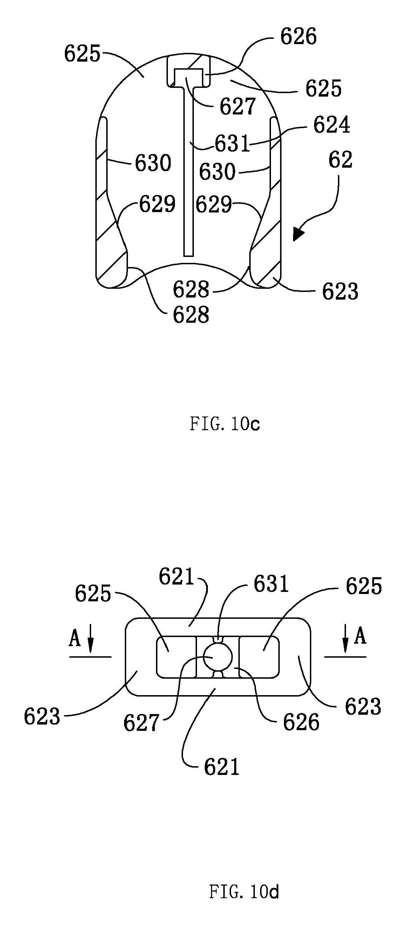

Introduction now will be directed to the guiding member 62. As shown in figures 8b and 10a-10d, the guiding member 62 includes a top wall 621, a bottom wall 622 parallel to the top wall 621 and a pair of sidewalls 623 connected to both of the walls 621 and 622. An accommodating chamber 624 is defined among the two walls 623, top wall 621 and bottom wall 622 for accommodating the fastener 61. Each top wall 621 and bottom wall 622 has a protrusion 631 formed thereon longitudinally at the inner surface thereof. Each protrusion 631 is corresponding to respective guiding groove 6111 of the fastener 61 for purpose of achieving predefined movement of the fastener 61 inside the guiding member 62 by means of directional movement of the protrusion 631 relative to the guiding groove 6111. Preferably, for being operated the shoelace adjustment controller easily by the user, rough texture such as toothed texture 632 may be produced on the top wall 621 and/or bottom wall 622 of the guiding member 62, for improvement of the user's grip ability of the guiding member 62, as shown in figure 10b.

In addition, a post 626 is projected firstly from the guiding member 62 at the location where the two sidewalls 623 are connected and then runs into the accommodating chamber 624. The post 626 has a locating hole 627 defined therein for retaining a spring therein. A shoelace through hole 625 corresponding to the shoelace through hole 6117 of the fastener 61 is formed between the bottom portion of each sidewall 623 and the post 626, and the shoelace through hole 625 communicates the accommodating chamber 624. Additionally, each sidewall 623 has an inner surface facing the accommodating chamber 624. The inner surface of each sidewall 623 includes a first guiding inner wall 628, a second guiding inner wall 630 and a transition inner wall 629 which connects the first and second inner walls 628, 629 together. An opening is defined by first inner guiding walls 628 of respective sidewalls 623. In this case, the width of the opening is slightly less than the maximum distance between the two finger portions 613 of the fastener 61 and the shoelace when the finger portions and the shoelace are both squeezed (namely, the location where the inclined action wall 651 and concave wall 652 are joined together). The distance between the two transition inner walls 629 is increased eventually from bottom to top (that is, the direction from the point where the respective transition inner wall 629 connects the first guiding inner wall 628 to the point where the respective transition inner wall 629 connects the second guiding inner wall 630). Comparatively, the distance between the two second guiding inner walls 630 is somewhat larger than the maximum distance between the two finger portions 613 of the fastener 61 when the two finger portions are not squeezed (that is, connection point between the inclined action wall 651 and the concave wall 652).

Reference is now made to figures 8a, 9a, 10c, 11 and 12, a first shoelace end 42 and a second shoelace end 41 pass through a passage formed between the finger portion 613 and plate 611 of the fastener 61 respectively, and then come out of the shoelace through hole 6117 of the curved portion 612. Afterwards, they come out of the shoelace passing hole 625 of the guiding member 62. The fastener 61 comes into the accommodating chamber 624 from the opening defined by said pair of first guiding inner walls 628 and with the help of movement of the protrusion 631 of the guiding member 62 with respect to the guiding groove 6111 of the fastener 61. Because the width of the opening is slightly smaller than the maximum distance between the two finger portions 613 of the fastener 61 and the shoelace when the finger portions and the shoelace are compressed together. Accordingly, once the fastener 61 is forced into the guiding member 62 resiliently, the fastener 61 will not be automatically separated from the guiding member 62 again.

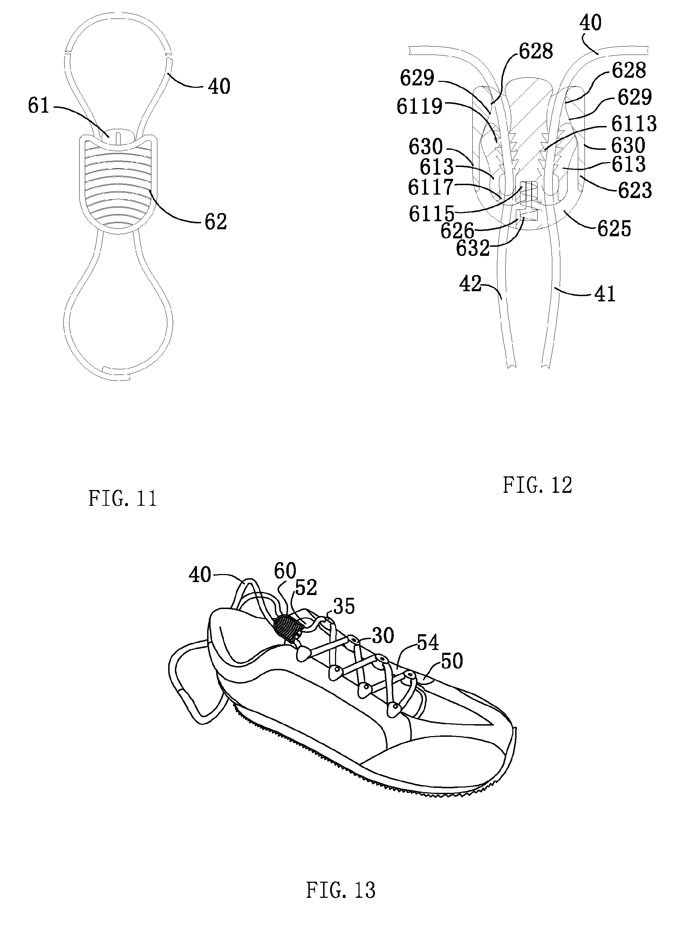

Moreover, one end of a compressible resilient element for example the compressible spring 632 shown in figure 12 will be sleeved on the locating hole 6115 of the fastener 61, while the other end of the compressible spring 632 is retained inside the locating hole 627 of the post 626 of the guiding member 62. In normal condition, as the compressible spring 632 applies counter force to the fastener 61, the inclined action walls 651 of the two finger portions 613 will be resiliently pressed against the two transition inner walls 629 of the guiding member 62 respectively. In addition, the respective finger portion 613 will be compressed towards the plate 611 due to force applied to respective action wall 651 by respective transition inner wall 629. This compression is such that the second toothed portion 6119 of a finger portion 613 and the first toothed portion 6113 of the plate 611 are pressed against the first shoelace end 41 and second shoelace end 42 respectively, thus resulting in compression of the shoelace 40 and fixation of the shoelace 40 relative to the fastener 61, and finally making the shoelace 40 tied tightly.

When it is necessary to adjust the shoelace 40 or replace the old shoelace, what the user only needs to do is to push the pressing handle 6112 such that the compressible spring 632 is further compressed. In this condition, the fastener 61 is further extended into the guiding member 62. With further extension into the guiding member, the inclined action wall 651 moves along the transition inner wall 629 towards the second guiding inner wall 630 eventually. As the distance between the two transition inner walls 629 is increased from top to bottom, and the distance between the second guiding inner walls 630 is slightly larger than the maximum distance of the two finger portions 613 of the fastener 61 when not being compressed. Accordingly, the finger portion 613 is gradually recovered from its compressing situation. That is, the distance between the finger portion 613 and plate 611 is increased eventually, thereby making the compression of the shoelace 40 weakened gradually and finally causing compeletly release of the shoelace 40. At this time, the shoelace can be adjusted or replaced with ease.

In a summary, the shoelace adjustment controller (the comination of the fastener and guiding member) provided by the invention is able to adjust or replace the shoelace by engagement of the fastener witht the guiding member. In case that the above combination of the controller and shoelace is combined with the shoe having a shoelace locker, a shoe more convenient than prior art shoe will be provided. Here, connection relationship among the shoelace locker 30, the shoelace 40, the shoe 50 and the shoelace adjustment controller 60 is denoted in figure 13.

What disclosed is only preferred embodiment of the invention, and it is not intended to limit the scope of the invention to such embodiments. The invention covers all these equivalent changes made according to the invention.

## Claims

1. A shoelace locker used in a shoe, comprising:
a base portion;
a neck portion extending up from one end of the base portion; and
an arm portion extending transversely from the neck portion towards other end of the base portion, wherein
a receiving hole for receiving a shoelace being defined by the arm portion, neck portion and base portion collectively;
a stop portion protruding from a distal end of the arm portion to the base portion;
the stop portion and the base portion defining an opening which is through with the receiving hole and is smaller than the receiving hole;
the opening is designed to pass pressed shoelace only, thereby the shoelace is pressed to pass the opening by pulling and then is located in the receiving hole.

2. The shoelace locker according to claim1, wherein curved surfaces are defined as transition surfaces between the neck portion and base portion and between the neck portion and arm portion; the curved surfaces are circular arc surfaces; a material averaging hole is defined at a location of the arm portion to obtain consistent thickness of the shoelace locker and to make forces applied to the shoelace locker during use more equally; another material averaging hole is defined in a lower surface of the base portion, the surface being located away from the neck portion to obtain consistent thickness of the shoelace locker and to make forces applied to the shoelace locker during use more equally; an engagement portion is extended outwardly from the base portion to define a sector shape, the engagement portion has a gradually curved bottom to conform with the curvature of the shoe.

3. The shoelace locker according to claims 1 or 2, wherein two groups of teeth are formed on one side of the shoelace receiving hole for securing the shoelace; the teeth are distributed symmetrically on the base portion and arm portion; the opening between the two groups of teeth is increased gradually from the neck portion; the opening between the two groups of teeth closing to the neck portion is slightly smaller than the dimension of the shoelace under compressed completely; the opening between the two groups of teeth at outermost is the same as that between the arm portion and base portion, such that the shoelace is capable of passing through the large opening and then being fastened at the small opening.

4. A shoe with a shoelace locker, comprising:
A plurality of shoelace lockers distributed on a pair of eyelet tabs;
said shoelace locker including a base portion, a neck portion extending from one end of the base portion, an arm portion extending transversely from the neck portion towards the other end of the base portion; a receiving hole for receiving the shoelace is defined by the arm portion, neck portion and base portion collectively; a stop portion protrudes from a distal end of the arm portion and extends to the base portion; the stop portion and the base portion define an opening therebetween, which is through with the receiving hole and smaller than the receiving hole; the opening is designed to pass a pressed shoelace only, thereby the shoelace is pressed by pulling and then is located in the receiving hole through the opening.

5. The shoe according to claim 4, wherein curved surfaces are defined as transition surfaces between the neck portion and base portion and between the neck portion and arm portion; the curved surfaces are circular arc surfaces; an engagement portion is extended from the base portion to form a neck portion.

6. A shoe comprising:
a plurality of shoelace lockers disposed on a pair of eyelet tabs; said shoelace locker including a base portion, a neck portion extending from one end of the base portion, and an arm portion extending transversely from the neck portion towards other end of the base portion; a receiving hole for receiving the shoelace is defined by the arm portion, neck portion and base portion collectively; a stop portion protrudes from a distal end of the arm portion and extends to the base portion; the stop portion and the base portion define an opening, which is through with the receiving hole and smaller than the receiving hole; the opening is designed to pass a pressed shoelace only, thereby the shoelace is pressed by pulling and then located in the receiving hole through the opening;
a shoelace which passes through the openings of the shoelace lockers in sequence and then is retained in the receiving holes so that an interlaced shoelace is formed; the shoelace has two ends to tighten the shoelace;
a shoelace adjustment controller which includes a fastener and a guiding member; the fastener comprises a plate and a finger portion formed at two lateral sides of the plate; a shoelace through hole is defined between the plate and finger portion; a passage is defined between the plate and the finger portion and communicates the shoelace through hole; an accommodating chamber is defined in the guiding member and extends across the entire guiding member to retain the fastener therein; one end of the shoelace runs across the shoelace through hole, through the passage and finally extends into the accommodating chamber; the accommodating chamber is adapted to selectively cause movement of the fastener with respect to the guiding member along the length direction of the shoelace, thus resulting in changes in distance between the plate and finger portion, thereby causing the shoelace tightened or loosing between the plate and finger portion.

7. The shoe according to claim 6, wherein a pair of curved portions is bent outwardly from one end of the plate; the finger portion is formed by extending from a distal end of each curved portion; the shoelace through hole is defined in the curved portion; a pressing handle is provided at the other end of the plate; the both ends of the plate define there between an upper surface and a lower surface parallel to each other; a guiding groove is formed in the upper surface, recessed from the upper surface and extends between the two ends of the plate; another guiding grooveis formed in the lower surface, recessed from the lower surface and extends between the two ends of the plate; the guiding member includes a top wall, a bottom wall parallel to the top wall and a pair of sidewalls connected to both of the top and bottom walls; an accommodating chamber is defined among the two sidewalls, top wall and bottom wall; each top wall and bottom wall has a protrusion formed thereon longitudinally at the inner surface thereof; each protrusion is corresponding to respective guiding groove of the fastener for purpose of achieving predefined movement of the fastener inside the guiding member by means of directional movement of the protrusion relative to the guiding groove;
a first locating hole is defined at one end adjacent corresponding curved portion, of the plate; a post is projected firstly from the guiding member at the location where the two sidewalls are connected and then runs into the accommodating chamber; the post has a second locating hole defined therein; one end of a compressible resilient element is sleeved on the first locating hole, while the other end of the compressible resilient element is retained inside the second locating hole; the fastener is retained inside the guiding member by said compressible resilient element; the compressible resilient element is a compressible spring; a shoelace through hole corresponding to the shoelace through hole of the fastener is formed between the bottom portion of each sidewall and the post, and the shoelace through hole of the guiding member communicates the accommodating chamber;

8. The shoe according to claim 7, wherein two sidewalls are formed between the two ends of the plate and are connected to both the upper surface and lower surface; each sidewall has a first toothed portion formed thereon; each finger portion has an inner surface which is close to corresponding sidewall of the plate; the inner surface has a second toothed portion formed thereon which corresponds the first toothed portion of the sidewall of the plate; the each curved portion, the finger portion extended from the curved portion and respective sidewall of the plate define the passage; one end of the shoelace runs across the shoelace through hole, through the passage and finally extends into the accommodating chamber.

9. The shoe according to claim 8, wherein said each finger portion has an outer surface opposing to the inner surface; the outer surface includes a concave wall concaving with respect to the plate and an inclined action wall joined with the concave wall; each sidewall of the guiding member has an inner surface facing the accommodating chamber; the inner surface of each sidewall includes a first guiding inner wall, a second guiding inner wall and a transition inner wall which connects the first and second inner walls together; an opening is defined by two first inner guiding walls; the width of the opening is slightly less than the maximum distance between the two finger portions of the fastener and the shoelace when the finger portions and the shoelace are both squeezed; the distance between the two transition inner walls is increased eventually from the point where the respective transition inner wall connects the first guiding inner wall to the point where the respective transition inner wall connects the second guiding inner wall; the distance between the two second guiding inner walls is larger than the maximum distance between the two finger portions of the fastener when the two finger portions are not squeezed.

10. The shoe according to claim 9, wherein the compressible spring is configured to cause the inclined action walls of the two finger portions to be resiliently pressed against the two transition inner walls of the guiding member respectively; the respective finger portion is compressed towards the plate due to force applied to respective action wall by respective transition inner wall; this compression is such that the second toothed portion of a finger portion and the first toothed portion of the plate are pressed against the first shoelace end and second shoelace end of the shoelace respectively, thus resulting in compression of the shoelace and fixation of the shoelace relative to the fastener; pushing of the pressing handle by the user causes the inclined action wall moves along the transition inner wall towards the second guiding inner wall eventuallysuch that the distance between the finger portion and plate is increased eventually, thereby making the compression of the shoelace weakened gradually and finally causing compeletly release of the shoelace; toothed texture is produced on the top wall and/or bottom wall of the guiding member for improvement of the user's grip ability of the guiding member.
